# EUROPÄISCHE PATENTANMELDUNG

(11) **EP 0 562 216 A1**
(43) Veröffentlichungstag der Anmeldung: **29.09.1993**
(21) Anmeldenummer: 92810480.1
(22) Anmeldetag: 24.06.1992
(51) Int. Cl.: B23Q 7/14, B23Q 1/66, B23Q 7/04

(54) **Maschine zum Bearbeiten von Werkstücken**

(30) Priorität: 25.03.1992 CH 940/92
(71) Anmelder: FENSTERFABRIK ALBISRIEDEN AG, CH-8047 Zürich (CH)
(72) Erfinder: Frei, Urs, CH-8047 Zürich (CH); Gasser, Bernhard, CH-9054 Haslen (CH)
(74) Vertreter: Ryffel, Rolf

(57) **Zusammenfassung**

Die Maschine besitzt eine Bearbeitungseinheit (1), die an einem Maschinengestell (3) bewegbar montiert ist und eine Halterung (2) für ein Werkzeug sowie einen Antriebsmotor für die Halterung (2) enthält. Für das Aufspannen und Bewegen von Werkstücken enthält die Maschine vier Paare von Halteelementen (7,8, 9,10, 11,12, 13,14), die unabhängig voneinander längs einer Bewegungsbahn (15, 16) verstellbar sind. In jedem Paar (7,8, 9,10, 11,12, 13,14) ist wenigstens eines der Halteelemente (8, 10, 12, 14) bezüglich des anderen in einer ersten zur Bewegungsbahn (15, 16) etwa senkrechten Richtung (y) verstellbar. An jedem Kalteelement (7-14) ist je wenigstens ein Spannstückträger (23, 24; 32, 33) in einer zweiten zur Bewegungsbahn (15, 16) etwa senkrechten Richtung (z) verstellbar. Mit den vier Paaren von Halteelementen (7,8, 9,10, 11,12, 13,14) können insbesondere balken- oder stangenförmige Werkstücke mit verschiedenen Profilen aufgespannt und kontinuierlich durch die Maschine bewegt werden, so dass ein kontinuierliches vollautomatisches Bearbeiten der Werkstücke möglich ist.

## Beschreibung

Die Erfindung bezieht sich auf eine Maschine zum Bearbeiten von Werkstücken, mit wenigstens einer Bearbeitungseinheit, die an einem Maschinengestell bewegbar montiert ist und die eine Halterung für ein Werkzeug sowie einen Antriebsmotor für die Halterung enthält, und mit Mitteln zum Aufspannen und Bewegen von Werkstücken.

Solche Maschinen sind bekannt. Die Bearbeitungseinheit kann am Maschinengestell so montiert sein, dass sie längs einer vertikalen Achse (z-Achse) und längs wenigstens einer horizontalen Achse (y-Achse) verschoben werden kann und zudem um beide Achsen geschwenkt werden kann. Eine so montierte Bearbeitungseinheit kann an einem z.B. balken- oder stangenförmigen Werkstück verschiedene Bearbeitungsvorgänge wie Fräsen, Bohren usw., automatisch durchführen. Die Bearbeitungseinheit kann in bekannter Weise dazu eingerichtet sein, benötigte Werkzeuge automatisch aus einem Werkzeugmagazin zu entnehmen bzw. nicht mehr benötigte Werkzeuge in das Werkzeugmagazin zurückzuführen.

In den bekannten Maschinen verunmöglichen jedoch die Mittel zum Aufspannen und Bewegen von Werkstücken einen kontinuierlichen vollautomatischen Betrieb. Zum einen können diese Mittel z.B. balken- oder stangenförmige Werkstückrohlinge bzw. Werkstücke nur so weit an der Bearbeitungseinheit vorbeibewegen, bis sie am Ende ihres Bewegungsweges angelangt sind. Dann muss der Betrieb unterbrochen werden, müssen die Spannmittel an den Anfang ihres Bewegungsweges zurückgebracht werden und muss das Werkstück oder ein neuer Werkstückrohling neu eingespannt werden. Ferner wären zwar übliche programmierbare Steuereinrichtungen ohne weiteres in der Lage, aufeinanderfolgend Werkstücke mit unterschiedlichen Profilierungen automatisch bearbeiten zu lassen; in den bekannten Maschinen müssen hierfür jedoch in der Regel Spannelemente manuell verstellt und Spannstücke manuell ausgewechselt werden.

Die Aufgabe der Erfindung besteht darin, diese Nachteile zu vermeiden und die eingangs angegebene Maschine so auszubilden, dass sie - gesteuert durch eine geeignete programmierbare Steuereinrichtung - Werkstücke, insbesondere balken- oder stangenförmige Werkstücke, kontinuierlich vollautomatisch bearbeiten kann.

Zur Lösung dieser Aufgabe ist die erfindungsgemässe Maschine dadurch gekennzeichnet, dass die Mittel zum Aufspannen und Bewegen von Werkstücken wenigstens vier Paare von Halteelementen enthalten, die unabhängig voneinander längs einer Bewegungsbahn bezüglich des Maschinengestells verstellbar sind, dass in jedem Paar wenigstens eines der Halteelemente bezüglich des anderen in einer ersten zur Bewegungsbahn etwa senkrechten Richtung verstellbar ist und dass an jedem Halteelement je wenigstens ein Spannstückträger in einer zweiten zur Bewegungsbahn etwa senkrechten Richtung verstellbar geführt ist.

In der erfindungsgemässen Maschine ist ein kontinuierlicher automatischer Betrieb zunächst dadurch möglich, dass zum Festhalten eines Werkstückes, zumindest vorübergehend, zwei der Paare von Halteelementen genügen. Da alle Paare unabhängig voneinander bewegbar sind, können daher die anderen der wenigstens vier Paare vom Werkstück gelöst und längs der Bewegungsbahn zurückbewegt werden. Nachher können diese anderen Paare das Werkstück halten und können die beiden erstgenannten Paare zurückbewegt werden. An jedem Halteelement können zwei Spannstückträger angebracht sein, die in Richtung der Bewegungsbahn nebeneinanderliegen. Dabei können die Spannstücke an den beiden Spannstückträgern zur Anpassung an unterschiedlich profilierte Werkstücke unterschiedliche Abmessungen und/oder Formen aufweisen. Ferner kann an wenigstens einigen der Spannstückträger jeweils ein Spannstück verstellbar und automatisch in jeder eingestellten Lage verriegelbar angebracht sein. Der Spannstückträger kann für das Verstellen eines solchen Spannstückes ein Antriebsmittel enthalten, das von einer zentralen, programmierbaren Steuereinrichtung der Maschine gesteuert werden kann. Eine solche zentrale Steuereinrichtung kann aber auch dazu eingerichtet sein, die Bewegungen der Spannstückträger und der Bearbeitungseinheit bei Bedarf so zu steuern, dass die Bearbeitungseinheit ein verstellbares Spannstück verstellt oder auch ein auswechselbares Spannstück automatisch auswechselt.

Ausführungsbeispiele der erfindungsgemässen Maschine werden nachstehend anhand der Zeichnungen näher erläutert. Darin zeigen:
Fig. 1 eine schematische perspektivische Ansicht einer Maschine zum Bearbeiten von Werkstücken,
Fig. 2 in grösserem Massstab eine schematische perspektivische Ansicht eines der vier Paare von Halteelementen der Maschine von Fig. 1 und
Fig. 3 eine schematische Seitenansicht zu Fig. 2 in kleinerem Massstab, mit einem zusätzlichen Auflagebock.

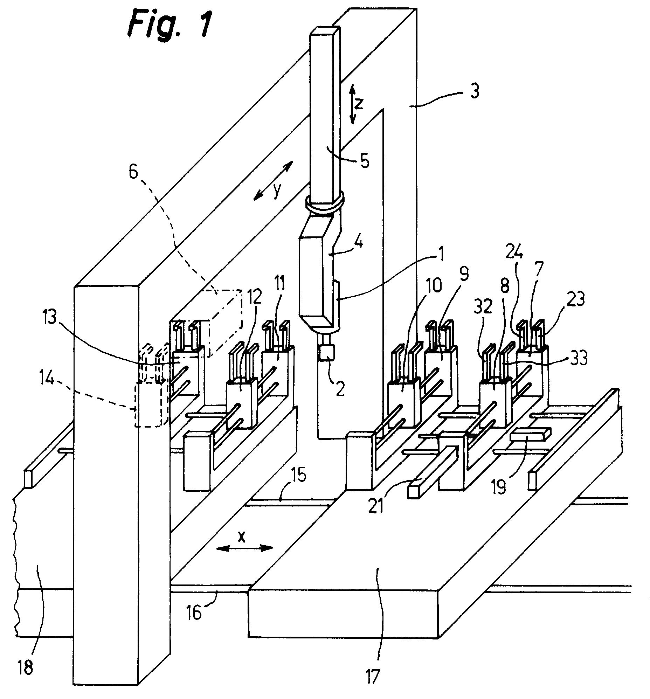

Die in Fig. 1 schematisch dargestellte Maschine besitzt eine Bearbeitungseinheit 1, die eine Halterung 2 für ein Werkzeug und einen Antriebsmotor für die Halterung 2 enthält. Die Bearbeitungseinheit 1 ist an einem portalförmigen Maschinengestell 3 bewegbar montiert, und zwar im Ausführungsbeispiel derart, dass sie bezüglich des Maschinengestells 3 in Richtung des Pfeils y horizontal und in Richtung des Pfeils z vertikal verschiebbar ist und zudem sowohl um eine zur y-Richtung parallele Achse als auch um eine zur z-Richtung parallele Achse schwenkbar ist. Zu diesem Zweck ist die Bearbeitungseinheit 1 an einem Bügel 4 um eine zur y-Richtung parallele Achse schwenkbar montiert. Der Bügel 4 ist seinerseits um eine zur z-Richtung parallele Achse schwenkbar an einem Träger 5 gehalten, der in y-Richtung und z-Richtung verschiebbar am Maschinengestell 3 angebracht ist. Die nicht dargestellten Antriebsmittel, welche die Verschiebe- und Schwenkbewegungen der Bearbeitungseinheit 1 bewirken, werden zweckmässig in üblicher Weise von einer ebenfalls nicht dargestellten Steuereinrichtung gesteuert, welche programmierbar ist, so dass die Bearbeitungseinheit 1 unterschiedlich geformte Werkstücke, z.B. unterschiedlich profilierte Balken, automatisch bearbeiten bzw. erzeugen kann. Die Steuereinrichtung kann die Bearbeitungseinheit 1 auch so steuern, dass diese ein nicht mehr benötigtes Werkzeug in ein mit unterbrochenen Linien schematisch angedeutetes Werkzeugmagazin 6 abgibt und ein neues Werkzeug aus dem Werkzeugmagazin 6 entnimmt. Bearbeitungsmaschinen mit den bisher anhand der Fig. 1 beschriebenen Teilen sind bekannt, so dass diese Teile hier nicht eingehender beschrieben werden müssen.

Weiter besitzt die Maschine Mittel zum Aufspannen und Bewegen von Werkstücken. Diese Mittel enthalten erfindungsgemäss wenigstens vier Paare von Halteelementen 7,8, 9,10, 11,12 und 13,14, die unabhängig voneinander längs einer Bewegungsbahn verstellbar sind. Die Bewegungsbahn ist beispielsweise durch Schienen 15, 16 gegeben, die in Richtung des Pfeils x senkrecht zur y-Richtung und zur z-Richtung verlaufen. Im Ausführungsbeispiel ist das Paar von Halteelementen 9,10 in x-Richtung feststehend auf einem Wagen 17 montiert, der von einem nicht dargestellten Antriebsmittel längs der Schienen 15, 16 verfahrbar ist. Das Paar von Halteelementen 7,8 ist auf dem Wagen 17 so montiert, dass es bezüglich des Paares 9,10 durch ein Antriebsmittel 19, z.B. Hydraulikzylinder, in x-Richtung verschiebbar ist. In gleicher Weise ist das Paar von Halteelementen 11,12 in x-Richtung feststehend auf einem zweiten Wagen 18 montiert, der unabhängig vom Wagen 17 längs der Schienen 15,16 verfahrbar ist. Das Halteelementpaar 13,14 ist auf dem Wagen 18 bezüglich des Paares 11,12 in x-Richtung verschiebbar.

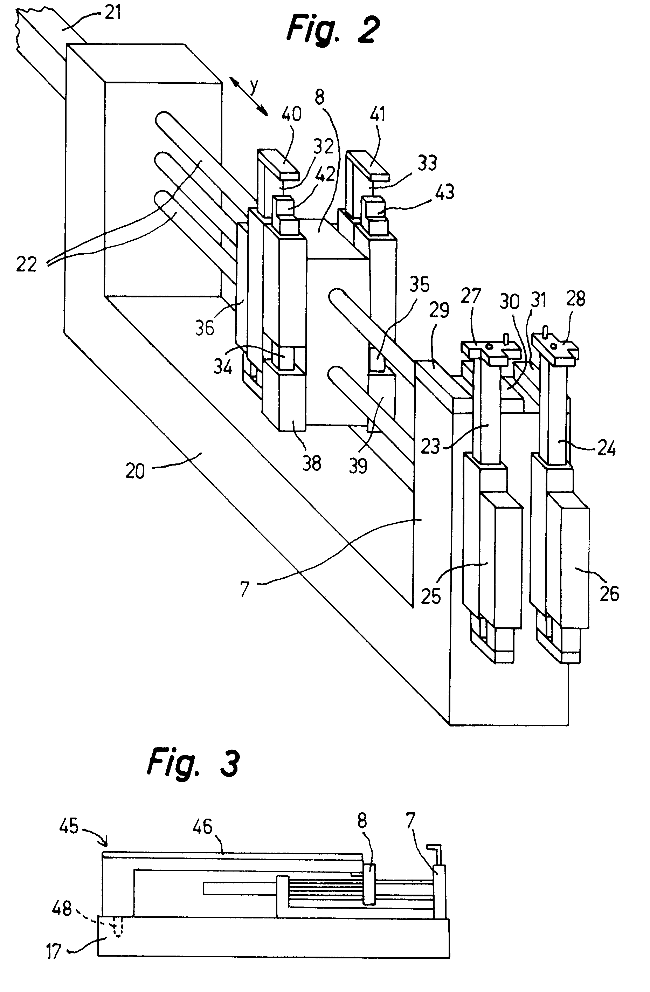

Das Paar von Halteelementen 7,8 ist in Fig. 2 in grösserem Massstab schematisch dargestellt. Die anderen Paare 9,10, 11,12 und 13,14 sind im wesentlichen gleich wie das Paar 7,8 aufgebaut und werden daher nicht im einzelnen beschrieben. Zu dem Halteelementpaar 7,8 gehört eine Grundplatte 20, auf der das pfostenförmige Halteelement 7 feststehend angeordnet ist. Das andere Halteelement 8 ist bezüglich des Halteelementes 7 von einem Antriebsmittel 21, z.B. Hydraulikzylinder, längs Führungsstangen 22 verschiebbar, die etwa senkrecht zu der durch die Schienen 15, 16 (Fig. 1) gegebenen Bewegungsbahn verlaufen, nämlich etwa horizontal in y-Richtung.

An jedem der Halteelemente 7 und 8 ist je wenigstens ein Spannstückträger etwa vertikal (in z-Richtung) verstellbar geführt. Im Ausführungsbeispiel sind am Halteelement 7 zwei Spannstückträger 23 und 24 angeordnet, die je von einem eigenen, von der Steuereinrichtung der Maschine individuell steuerbaren Antriebsmittel 25 bzw. 26, z.B. Hydraulikzylinder, vertikal verstellbar sind. Die Spannstückträger 23 und 24 tragen auf ihren oberen Enden Spannstücke 27 bzw. 28. Die Spannstücke 27 und 28 sind auf den Spannstückträgern auswechselbar und/oder verstellbar, z.B. um vertikale Achsen schwenkbar, und in vorbestimmten Einstellagen feststellbar befestigt. Für das Verstellen der Spannstücke 27 und 28 bezüglich der Spannstückträger 23 bzw. 24, zur Anpassung an unterschiedlich geformte Werkstücke, z.B. unterschiedlich profilierte Balken oder Stangen, kann jeder Spannstückträger ein nicht dargestelltes Antriebsmittel enthalten. Es ist aber auch möglich, die Bearbeitungseinheit 1 (Fig. 1) mit der Steuereinrichtung der Maschine so zu steuern, dass die Bearbeitungseinheit 1 bei Bedarf die Spannstücke 27 und 28 verstellt. Stattdessen kann die Bearbeitungseinheit auch jedes der Spannstücke 27 und 28 vom Spannstückträger 23 bzw. 24 abnehmen, in das Werkzeugmagazin 6 (oder ein anderes Magazin) verbringen, dem Magazin andere Spannstücke entnehmen und auf die Spannstückträger 23 und 24 aufsetzen, alles von der programmierbaren Steuereinrichtung der Maschine automatisch gesteuert. Die Spannstücke werden in den Spannstückträgern durch nicht dargestellte Mittel automatisch verriegelt.

Die Spannstücke 27 und 28 weisen dem Halteelement 8 zugekehrte, z.B. vertikale Spannflächen und/oder nach unten gerichtete Spannflächen auf. Ferner können auch die dem Halteelement 8 zugekehrten Oberflächen der Spannstückträger 23 und 24 als vertikale Spann- bzw. Anschlagflächen dienen. Die beiden in x-Richtung nebeneinanderliegenden Spannstücke 27 und 28 können die gleiche Form oder unterschiedliche Formen haben.

Mit dem Halteelement 7 sind ferner drei weitere Spannstücke 29, 30 und 31 starr verbunden. Die Spannstücke 29, 30 und 31 können nach oben gerichtete, z.B. etwa horizontale Spann- oder Auflageflächen und/oder dem Halteelement 8 zugekehrte, z.B. etwa vertikale Spann- oder Anschlagflächen aufweisen.

Am Halteelement 8 sind im Ausführungsbeispiel vier Spannstückträger 32, 33, 34 und 35 etwa vertikal verstellbar geführt. Jedem der vier Spannstückträger ist je ein eigenes, individuell steuerbares Antriebsmittel, z.B. Hydraulikzylinder, zur vertikalen Verstellung zugeordnet. Von den vier Antriebsmitteln sind in der Zeichnung nur die drei Antriebsmittel 36, 38 und 39 sichtbar. Die vier Spannstückträger tragen auf ihren oberen Enden Spannstücke 40, 41, 42 bzw. 43. Diese können auf den Spannstückträgern fest angebracht oder wie vorstehend beschrieben verstellbar und/oder auswechselbar sein. Die Spannstücke 40 und 41 können nach unten gerichtete, z.B. etwa horizontale Spannflächen aufweisen sowie gewünschtenfalls dem Halteelement 7 zugekehrte Spann- bzw. Anschlagflächen. Die Spannstücke 42 und 43 können dem Halteelement 7 zugekehrte Spann- oder Anschlagflächen und gewünschtenfalls nach oben gerichtete Spann- bzw. Auflageflächen aufweisen. Die jeweils in x-Richtung nebeneinanderliegenden Spannstücke 40 und 41 bzw. 42 und 43 können die gleiche Form oder unterschiedliche Formen haben.

Alle im Vorstehenden erwähnten Antriebsmittel sind ebenfalls von der zentralen, programmierbaren Steuereinrichtung der Maschine gesteuert. Damit ist eine kontinuierliche, vollautomatische Bearbeitung von insbesondere balken- oder stangenförmigen Werkstücken mit unterschiedlichen Profilierungen möglich.

Für das Bearbeiten von in zwei Dimensionen ausgedehnten, flächigen Werkstücken, z.B. Platten oder Rahmen, kann auf jeden der Wagen 17 und 18 je wenigstens ein in Fig. 3 schematisch angedeuteter Auflagebock 45 aufgesetzt werden, der eine mit Saugspannern 46 versehene Oberseitenfläche aufweist. Auf die Auflageböcke 45 kann dann ein flächiges Werkstück aufgelegt werden, das sich bis zu den Spannstücken 27, 28, 29, 30, 31 des Halteelementes 7 erstreckt, wobei die Spannstücke 40, 41, 42, 43 am Halteelement 8 in untere Endlagen gesenkt sind. Das Werkstück wird dann durch die Spannflächen an den Spannstückträgern 23, 24 horizontal positioniert und von den Spannstücken 27, 28 sowie den Saugspannern 46 vertikal nach unten gespannt. Das Aufsetzen der Auflageböcke 45 auf die Wagen 17, 18 kann ebenfalls von der Bearbeitungseinheit 1 automatisch durchgeführt werden. Die Auflageböcke 45 weisen Zentrierzapfen 48 auf, die in Oeffnungen in den Wagen 17, 18 aufgenommen und darin automatisch festgeklemmt werden.

## Patentansprüche

1. Maschine zum Bearbeiten von Werkstücken, mit wenigstens einer Bearbeitungseinheit (1), die an einem Maschinengestell (3) bewegbar montiert ist und eine Halterung (2) für ein Werkzeug sowie einen Antriebsmotor für die Halterung (2) enthält, und mit Mitteln zum Aufspannen und Bewegen von Werkstücken, dadurch gekennzeichnet, dass die Mittel zum Aufspannen und Bewegen von Werkstücken wenigstens vier Paare von Halteelementen (7,8, 9,10, 11,12, 13,14) enthalten, die unabhängig voneinander längs einer Bewegungsbahn (15, 16) bezüglich des Maschinengestells (3) verstellbar sind, dass in jedem Paar (7,8, 9,10, 11,12, 13,14) wenigstens eines der Halteelemente (8, 10, 12, 14) bezüglich des anderen in einer ersten zur Bewegungsbahn (15, 16) etwa senkrechten Richtung (y) verstellbar ist und dass an jedem Halteelement je wenigstens ein Spannstückträger (23, 24; 32, 33, 34) in einer zweiten zur Bewegungsbahn (15, 16) etwa senkrechten Richtung (z) verstellbar geführt ist.

2. Maschine nach Anspruch 1, dadurch gekennzeichnet, dass jedem der Paare von Halteelementen (7,8, 9,10, 11,12, 13,14) je ein eigenes, individuell steuerbares Antriebsmittel (21) zum Verstellen des einen Halteelementes (8, 10, 12, 14) bezüglich des anderen zugeordnet ist.

3. Maschine nach Anspruch 1 oder 2, dadurch gekennzeichnet, dass jedem der verstellbaren Spannstückträger (23, 24, 32, 33, 34) je ein eigenes, individuell steuerbares Antriebsmittel (25, 26, 36, 38, 39) zum Verstellen des Spannstückträgers bezüglich des betreffenden Halteelementes (7, 8) zugeordnet ist.

4. Maschine nach einem der Ansprüche 1 bis 3, dadurch gekennzeichnet, dass an jedem Halteelement (7, 8) je wenigstens zwei Spannstückträger (23, 24, 32, 33) angebracht sind, die in Richtung der Bewegungsbahn (15, 16) nebeneinander liegen.

5. Maschine nach einem der Ansprüche 1 bis 4, dadurch gekennzeichnet, dass je zwei der Paare von Halte-elementen jeweils auf einem längs der Bewegungsbahn (15, 16) bewegbaren Wagen (17, 18) montiert sind, wobei jeweils eines der beiden Paare auf dem Wagen bezüglich des anderen Paares durch ein individuell steuerbares Antriebsmittel (19) in Richtung der Bewegungsbahn (15, 16) verstellbar ist.

6. Maschine nach den Ansprüchen 2, 3 und 5, dadurch gekennzeichnet, dass alle genannten Antriebsmittel (21, 25, 26, 36, 38, 39, 19) von einer zentralen, programmierbaren Steuereinrichtung gesteuert sind, welche auch die Bewegungen der Wagen (17, 18) längs der Bewegungsbahn (15, 16) sowie Antriebsmittel zum Bewegen der Bearbeitungseinheit (1) bezüglich des Maschinengestells (3) und den Antriebsmotor der Bearbeitungseinheit (1) steuert.

7. Maschine nach einem der Ansprüche 1 bis 6, dadurch gekennzeichnet, dass an wenigstens einigen der Spannstückträger (23, 24) jeweils ein Spannstück (27, 28) verstellbar und/oder auswechselbar und automatisch feststellbar angebracht ist.

8. Maschine nach den Ansprüchen 6 und 7, dadurch gekennzeichnet, dass wenigstens einige der Spannstückträger (23, 24) je ein eigenes, von der zentralen Steuereinrichtung individuell steuerbares Antriebsmittel zum Verstellen eines verstellbar angebrachten Spannstückes (27, 28) besitzen.

9. Maschine nach den Ansprüchen 6 und 7, dadurch gekennzeichnet, dass die zentrale Steuereinrichtung dazu eingerichtet ist, die Antriebsmittel zum Bewegen der Bearbeitungseinheit (1), die Antriebsmittel zum Bewegen der Wagen (17, 18) und der Paare von Kalteelementen (7,8, 9,10, 11,12, 13,14), die Antriebsmittel (21) zum Verstellen der Halteelemente (7, 8) bezüglich einander und die Antriebsmittel (25, 26, 36, 38, 39) zum Verstellen der Spannstückträger (23, 24, 32, 33, 34) bei Bedarf so zu steuern, dass die Bearbeitungseinheit (1) ein auswechselbares Spannstück (27) von einem Spannstückträger (23) abnimmt und in ein Magazin (6) der Maschine verbringt, ein anderes Spannstück aus dem Magazin (6) entnimmt und dieses andere Spannstück in den Spannstückträger (23) einsetzt.

10. Maschine nach Anspruch 5, dadurch gekennzeichnet, dass jedem der Wagen (17, 18) je wenigstens ein Auflagebock (45) für flächige Werkstücke zugeordnet ist, der auf den Wagen aufsetzbar ist und der eine mit Saugspannern (46) versehene Oberseitenfläche aufweist.
